Europäisches Patentamt

European Patent Office

Office européen des brevets

(19)

(11) Veröffentlichungsnummer: **0 055 981**
**A1**

(12) # EUROPÄISCHE PATENTANMELDUNG

(21) Anmeldenummer: **82100010.6**

(22) Anmeldetag: **04.01.82**

(51) Int. Cl.³: **B 01 D 13/00**
**C 02 F 1/44**

(30) Priorität: **05.01.81 ES 498326**
**14.04.81 ES 501374**

(43) Veröffentlichungstag der Anmeldung:
**14.07.82 Patentblatt 82/28**

(84) Benannte Vertragsstaaten:
**BE DE FR GB IT NL SE**

(71) Anmelder: **Ramo Mesple, D. José Luis**
**La Maso 87**
**Madrid(ES)**

(72) Erfinder: **Ramo Mesple, D. José Luis**
**La Maso 87**
**Madrid(ES)**

(74) Vertreter: **Feldkamp, Rainer, Dipl.-Ing. et al,**
**Patent Attorneys Dipl.-Ing. Curt Wallach Dipl.-Ing.**
**Günther Koch, Dr. Tino Haibach Dipl.-Ing. Rainer**
**Feldkamp Kaufinger Strasse 8**
**D-8000 München 2(DE)**

(54) Wasserentsalzungssystem nach dem Verfahren der umgekehrten Osmose.

(57) Bei einem Wasserentsalzungssystem nach dem Verfahren der umgekehrten Osmose wird zur Verringerung des Energieaufwandes der Druck in der am Ausgang des Osmosemoduls [2] austretenden Salzlauge in einer Druckrückgewinnungseinrichtung [3] dazu ausgenutzt, zu behandelndes Wasser mit vorgegebener Menge unter einen vorgegebenen Druck zu setzen, wobei diese Wassermenge zusammen mit der Wasserströmung einer Hauptpumpe [1] dem Eingang des Osmosemoduls [2] zugeführt wird. Auf diese Weise ist eine geringere Leistung der Hauptpumpe [1] erforderlich.

Fig.1

EP 0 055 981 A1

Croydon Printing Company Ltd.

- 1 -

## Wasserentsalzungssystem nach dem Verfahren der umgekehrten Osmose

Die Erfindung bezieht sich auf ein Wasserentsalzungssystem nach dem Verfahren der umgekehrten Osmose, mit einem Osmosemodul zur Durchführung des Verfahrens der umgekehrten Osmose und mit einer Hauptpumpe zur Speisung des Osmosemoduls mit unter Druck stehendem salzhaltigem Wasser.

Bekannte Wasserentsalzungssysteme zur Durchführung des Verfahrens der umgekehrten Osmose benötigen zwar im Vergleich zu anderen bekannten Wasserentsalzungsverfahren relativ wenig Energie, doch wurde immer versucht, auch diesen Energieverbrauch weiter zu reduzieren. Hierbei wurde versucht, die in der aus dem Osmosemodul austretenden Salzlauge enthaltene Energie zurückzugewinnen.

Bei bekannten Wasserentsalzungssystemen wird das Osmosemodul mit einer Menge Q des salzhaltigen Wassers unter einem Druck Poi gespeist. Die Menge an entsalztem Wasser ist ein Teil hiervon, nämlich Q · Y, wobei Y kleiner als 1 ist. Die aus dem Osmose-

- 2 -

modul austretende Menge an Salzlauge ist dann Q·(1-Y). Diese Salzlauge wird unter einen Druck gegeben, der dem Speisedruck Poi abzüglich des Druckverlustes Joi beim Durchgang durch das Osmosemodul entspricht. Dieser Druckverlust Joi ist, verglichen mit dem Speisedruck Poi, relativ gering, so daß die in der Salzlauge enthaltene Energie Q·(1-Y)·(Poi-Joi) sehr groß ist, und sogar größer sein kann als die Energie, die für die Durchführung des Verfahrens an sich benötigt wird:

$$Q \cdot Poi - Q \cdot (1-Y) \cdot (Poi - Joi) =$$
$$= Q \cdot Y \cdot Poi + Q \cdot (1-Y) \cdot Joi =$$
$$= Q \cdot Y \cdot (Poi - Joi) + Q \cdot Joi \qquad (I)$$

Abgesehen von Versuchen, die Leistungen der Pumpen und die Funktion und Leistung der Membranen des Osmosemoduls zu verbessern, wurde versucht, diese in der Salzlauge enthaltene Energie mit Hilfe von durch die Salzlauge angetriebenen Turbinen auszunutzen und zurückzugewinnen.

Der Erfindung liegt die Aufgabe zugrunde, ein Wasserentsalzungssystem der eingangs genannten Art zu schaffen, das bei einfachem Aufbau einen verringerten Energieverbrauch aufweist.

Diese Aufgabe wird erfindungsgemäß dadurch gelöst, daß das Osmosemodul zusätzlich zu der von der Hauptpumpe gelieferten Wasserströmung von einer Wasserströmung aus einer Druckrückgewinnungseinrichtung gespeist ist, die von der aus dem Osmosemodul austretenden Salzlösung angetrieben ist.

Auf diese Weise wird ein Teil der dem Eingang des Osmosemoduls zuzuführenden und unter hohem Druck stehenden Wassermenge von der Druckrückgewinnungseinrichtung geliefert, so daß die Leistung der Hauptpumpe wesentlich geringer sein kann. Der Druck am Ausgang des Osmosemoduls trägt dabei zur Erzeugung des Druckes am Eingang des Osmosemoduls bei und es ist nicht erforderlich, zunächst eine hohe Energie zur Erzeugung des Druckes aufzuwenden und dann zu versuchen, einen Teil dieser Energie aus dem Druck der Salzlauge am Ausgang des Osmosemoduls für andere Zwecke zurückzugewinnen.

Bei dem erfindungsgemäßen Wasserentsalzungssystem wird das salzhaltige Wasser, das der Membran des Osmosemoduls in einer Menge $Q$ und unter einem Druck $Poi$ zugeführt wird, aus zwei Strömungen abgeleitet: Die Strömung $Q \cdot Y$ wird von der Hauptpumpe unter einem Druck $Poi - (Joi + \varepsilon)$ geliefert, während der Rest der Strömung $(1 - Y) \cdot Q$ von der Druckrückgewinnungseinrichtung geliefert wird, die einen Kolben oder eine Membran aufweist, der·bzw. die mit dem Druck $Poi - Joi$ durch die Salzlauge, die in gleichem Volumen und unter gleichem Druck aus dem Osmosemodul heraustritt beaufschlagt wird. Hierbei ist $\varepsilon$ der Druckverlust zwischen den beiden durch den Kolben oder die Membran gebildeten Kammern eines Zylinders oder Behälters, welcher durch die Reibung des Kolbens oder die Verformungsenergie der Membran hervorgerufen wird. Die Hauptaufgabe des Kolbens bzw. der Membran besteht darin, eine Mischung des salzhaltigen Wassers mit der Salzlauge zu verhindern. Die gesamte Wasserströmung $Q \cdot Y + (1-Y) \cdot Q = Q$ wird, gegebenenfalls nach Durchlaufen einer

– 4 –

Hilfspumpe, die einen Druckanstieg hervorruft, der gleich Joi + $\varepsilon$ (Druckverlust in dem Osmosemodul + $\varepsilon$) ist, dem Eingang des Osmosemoduls zugeführt, wobei der Druck am Eingang dieses Osmosemoduls wie folgt ist:

$$(Poi - Joi - \varepsilon) + Joi + \varepsilon = Poi \qquad (II)$$

Diese Pumpe zwischen der Druckrückgewinnungseinrichtung und dem Eingang des Osmosemoduls kann durch eine Antriebsvorrichtung ersetzt werden, die den Kolben oder die Membran der Druckrückgewinnungseinrichtung antreibt, oder es kann alternativ zwischen dem Salzlaugeausgang des Osmosemoduls und dem Eingang der Druckrückgewinnungseinrichtung eine Pumpe angeordnet sein.

Die Druckrückgewinnungseinrichtung kann aus einem einzigen Zylinder bestehen, der durch einen Kolben in zwei Kammern unterteilt ist, oder es können zwei Zylinder mit über eine gemeinsame Achse verbundenen Kolben verwendet werden, wodurch ein kontinuierlicher Betrieb ermöglicht wird. Im letztgenannten Fall können die Zylinder unterschiedliche Durchmesser aufweisen, wobei der Durchmesser des mit dem Ausgang des Osmosemoduls verbundenen Zylinders größer ist als der Durchmesser des Zylinders, der mit dem Eingang des Osmosemoduls verbunden ist, so daß der Druckverlust in dem Osmosemodul sowie aufgrund der Reibung der Kolben ausgeglichen wird.

Gemäß einer anderen Ausgestaltung der Erfindung besteht die Druckrückgewinnungseinrichtung in der bereits angedeuteten Weise aus Behältern, die durch

- 5 -

elastische Membranen jeweils in zwei Kammern unterteilt sind, von denen jeweils die erste mit dem Eingang des Osmosemoduls bzw. mit der Quelle des salzhaltigen Wassers verbunden ist, während die zweiten Kammern mit dem Ausgang des Osmosemoduls bzw. mit dem Abfluß für die Salzlauge verbunden sind.

In allen Fällen sind die jeweiligen Kammern über Ventile mit dem Eingang bzw. dem Ausgang des Osmosemoduls verbunden.

Im folgenden wird die Erfindung anhand von lediglich Ausführungsbeispiele darstellenden Zeichnungen näher erläutert.

Es zeigen:

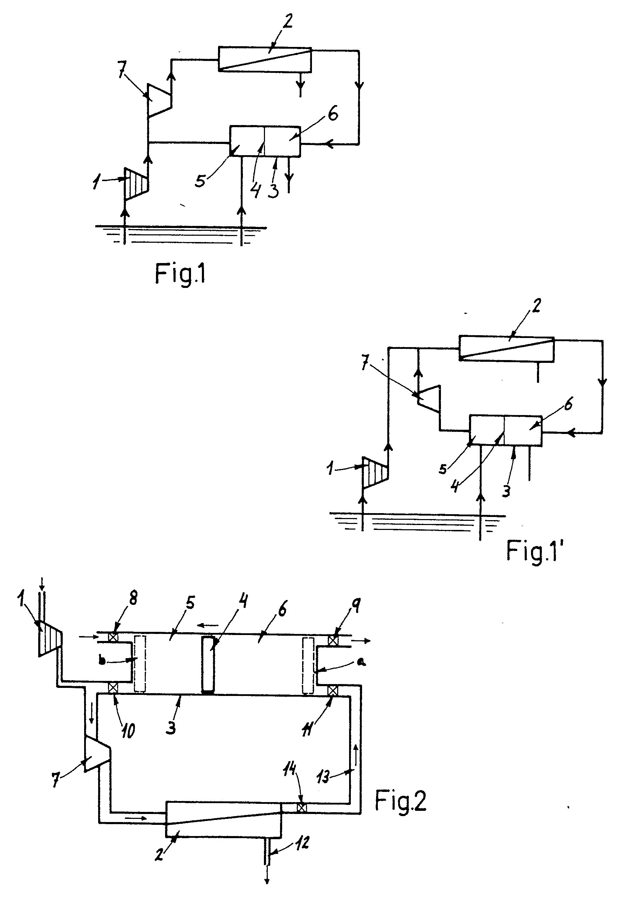

Fig. 1    eine schematische Darstellung des hydraulischen Kreises einer ersten Ausführungsform des Wasserentsalzungssystems,

Fig. 1'   eine schematische Darstellung einer weiteren Ausführungsform des Wasserentsalzungssystems,

Fig. 2    eine ausführlichere Ansicht der Ausführungsform des Wasserentsalzungssystems nach Fig. 1,

Fig. 3    eine weitere ausführlichere Ausführungsform eines kontinuierlich arbeitenden Wasserentsalzungssystems mit einer Druckrückgewinnungseinrichtung mit zwei Zylindern,

- 6 -

Fig. 4    eine weitere Ausführungsform des Wasserentsalzungssystems unter Verwendung einer
Druckrückgewinnungseinrichtung in Form von
durch Membranen unterteilten Behältern,

Fig. 5    eine weitere Ausführungsform des Wasserentsalzungssystems, die Höhenunterschiede im
Gelände ausnutzt,

Fig. 6    eine Ausführungsform des Wasserentsalzungssystems mit zwei Zylindern mit unterschiedlichen Durchmessern entsprechend der Ausführungsform nach Fig. 1,

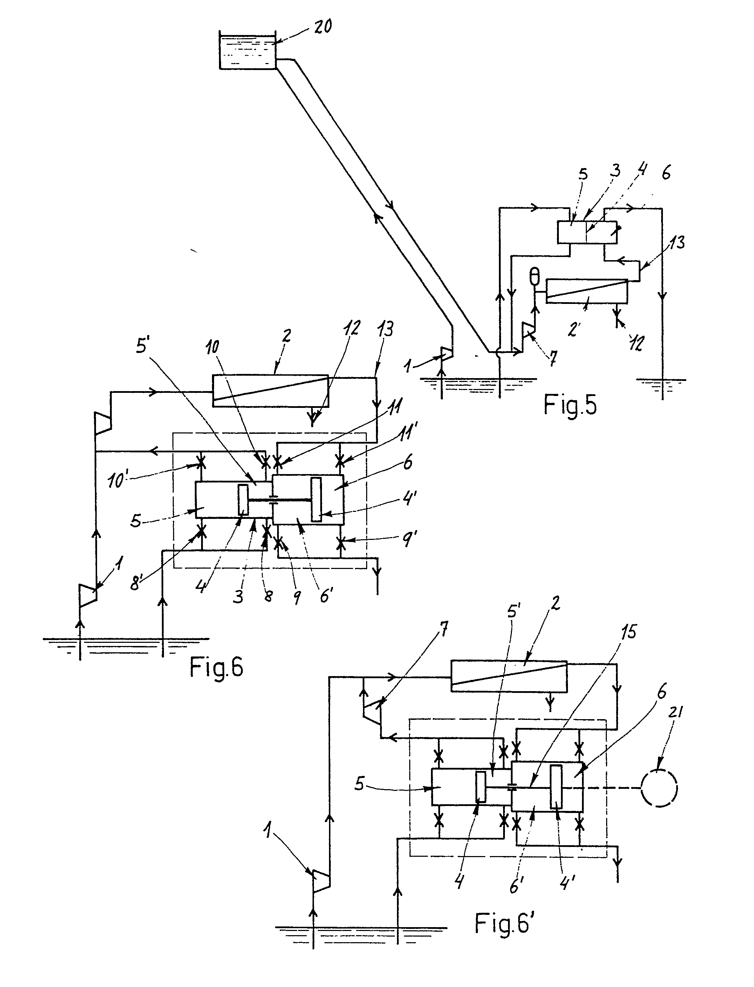

Fig. 6'   eine der Fig. 6 ähnliche Ausführungsform,
bei der jedoch die Pumpen gemäß Fig. 1 angeordnet sind.

In Fig. 1 ist eine erste Ausführungsform des Wasserentsalzungssystems gezeigt, bei der die Hauptpumpe 1
eine Wassermenge $Q \cdot Y$ unter einem Druck $Poi - Joi = \mathcal{E}$
liefert.

Eine weitere Wasserströmung wird dem Osmosemodul 2
zur Durchführung des Verfahrens der umgekehrten
Osmose von einer Druckrückgewinnungseinrichtung ge-—
liefert, die aus einem Zylinder 3 besteht, in dessen
Innerem ein Kolben 4 frei beweglich angeordnet ist,
der das zu behandelnde Salzwasser in der Kammer 5
von der Salzlauge in der Kammer 6 trennt.

Die gesamte Wassermenge, d. h. die von der Hauptpumpe 1 gelieferte Menge und die von dem Zylinder 3
zugeführte Menge, wird mit Hilfe einer zweiten

- 7 -

Pumpe 7 dem Osmosemodul 2 zugeführt.

Diese zweite Hilfs- bzw. Zusatzpumpe 7 kann in Serie mit der Hauptpumpe angeordnet sein, wie dies in Fig. 1 gezeigt ist, oder sie kann parallel zur Hauptpumpe angeordnet sein, wie dies in Fig. 1' gezeigt ist, wobei diese Zusatzpumpe direkt das Osmosemodul speist.

Diese Ausführungsformen des Wasserentsalzungssystems arbeiten wie folgt:
Zu Anfang befindet sich der frei bewegliche Kolben 4 (siehe Fig. 2) in·der gestrichelt dargestellten Stellung a, wobei an den Kammern 5, 6 angeordnete Ventile 8, 9 geschlossen und Ventile 10, 11 geöffnet sind.

Der Zylinder ist mit zu behandelndem Salzwasser gefüllt, und der gesamte Umlaufkreis ist ohne Luftblasen gefüllt. Bei der Inbetriebsetzung der Pumpen ergibt sich am Eingang des Osmosemoduls 2 ein ausreichender Betriebsdruck. Erzeugtes Nutzwasser verläßt das Osmosemodul 2 über eine Leitung 12, während die Salzlauge das Osmosemodul 2 über eine Leitung 13 verläßt. Die Salzlauge kann jedoch nur dann aus dem Osmosemoduld 2 austreten, wenn eine Bewegung des Kolbens 4 erfolgt. Zu diesem Anfangszeitpunkt, zu dem noch kein Wasserstrom entstanden ist, ist der Lastverlust im inneren Kreis des Osmosemoduls 2 gleich Null, wobei der Druck in der Kammer 6 größer ist als in der Kammer 5, wodurch eine Bewegung des Kolbens in Pfeilrichtung gemäß Fig. 2 beginnt. Andererseits würde zu dem Zeitpunkt, zu dem die Wassermenge im Osmosemodul 2 größer werden würde. als der

- 8 -

erforderliche Druckabfall Joi, der mit dem Ventil 14
reguliert ist, die Tendenz eines Druckabfalls auf
einen oberhalb dieses Wertes liegenden Wert auftreten, wodurch der Druck in der Kammer 6 abfällt und
ein stabilisiertes System hervorgerufen wird.

Wenn der Kolben seine Bewegung in der Position b gemäß Fig. 2 beendet hat, so schließen sich die Ventile 10 und 11, während sich die Ventile 8 und 9 öffnen. Zu diesem Zeitpunkt wird entweder mittels eines
direkten Antriebs des Kolbens oder mit Hilfe eines
leichten Überdruckes des zu behandelnden salzhaltigen Wassers, das über das Ventil 8 eintritt, der
Kolben 4 auf seine Ausgangsposition a gebracht, wobei die Salzlauge über das Ventil 9 austritt, wobei
diese austretende Salzlauge keine Energie mehr enthält. Bei Erreichen der Ausgangsposition a werden
die Ventile 8 und 9 geschlossen, während die Ventile
10 und 11 geöffnet werden, so daß der Zyklus wieder
neu beginnt.

Bei diesen Ausführungsformen des Wasserentsalzungssystems nach den Fig. 1, 1' und 2, bei denen lediglich ein einziger Zylinder verwendet wird, ist die
Erzeugung von entsalztem Wasser lediglich diskontinuierlich möglich, da die Produktion während der
Zeit, während der der Kolben 4 in seine Ausgangsposition a zurückkehrt, unterbrochen wird.

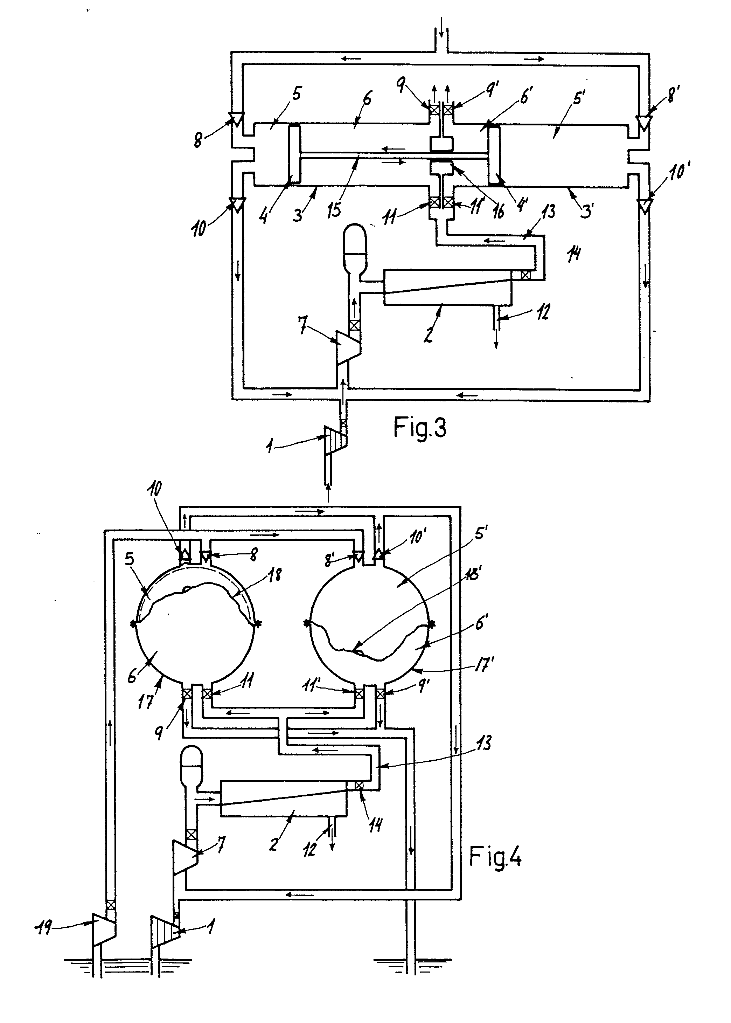

Eine kontinuierliche Erzeugung von entsalztem Wasser
ist jedoch mit Hilfe der Ausführungsformen nach den
Fig. 3 bis 6' möglich.

Bei der Ausführungsform nach Fig. 3 sind zwei Zylinder gleichachsig zueinander angeordnet und arbeiten gegenphasig. In jedem Zylinder ist ein Kolben 4, 4' angeordnet, und die beiden Kolben sind über eine gemeinsame Achse 15 verbunden. Durch diese Kopplung der beiden Kolben wird erreicht, daß der Kolben zu einem vorgegebenen Zeitpunkt mit Energie für seine Bewegung versorgt wird und sich in einer Betriebsphase befindet, in der Energie auf den anderen Kolben übertragen wird und gleichzeitig die Salzlauge entfernt wird, so daß dieses System gegebenenfalls selbstansaugend sein kann, wenn die Ansaughöhe niedrig ist.

Die Ventile 8, 10, 8' und 10' können Rückschlagventile sein, während die Ventile 9, 11, 9' und 11' durch einen Servoantrieb gesteuert sein können, der die Kolben antreibt und mit Hilfe von Endschaltern gesteuert wird, die an der Trennwand 16 zwischen den Zylindern angeordnet sind. Hierbei ist vorzugsweise ein Druckausgleichsbehälter vorgesehen, um eine augenblickliche Druckerhöhung zu verhindern, wenn einige Ventile geschlossen werden, bevor die anderen geöffnet werden.

Diese Ausführungsform des Wasserentsalzungssystems ist sehr einfach und der Druckunterschied zwischen den beiden Seiten des Kolbens ist immer minimal, so daß die Justierung nicht von allzu großer Genauigkeit sein muß. Es entstehen lediglich große Druckdifferenzen an den beweglichen Teilen der Achsabdichtung, wo diese den Zylinder verläßt. Diese Abdichtung oder der Sitz ist jedoch leicht herstellbar. Das beschriebene Wasserentsalzungssystem ist wenig aufwendig und ermöglicht die Einsparung von

- 10 -

aufwendigen Pumpen und Energierückgewinnungsturbinen, so daß eine maximale Energieeinsparung bei der Durchführung des Entsalzungsverfahrens erreichbar ist.

Die Gesamtleistung des Wasserentsalzungssystems ist weiterhin durch das zweistufige Pumpverfahren zu verbessern. Die Pumpe 8 arbeitet in mehreren Stufen in festem Betriebszustand, wobei sie eine hohe Leistung erreichen kann, während die Pumpe 7 als einfache Pumpe mit sich ändernder Betriebsweise arbeitet, die sich an den jeweiligen Bedarf des Osmosemoduls anpaßt.

Obwohl unterschiedliche Geschwindigkeiten des Kolbens innerhalb eines weiten Bereiches möglich sind, ist anzunehmen, daß seine Bewegung nicht so schnell sein wird, daß große Wasser- und Kolbengeschwindigkeiten auftreten, so daß sich ein Minimum an Verlusten ergibt.

Im Prinzip ist eine Geschwindigkeit des Kolbens und des im Zylinder enthaltenen Wassers von ca. 0,5 m/s bis 2,5 m/s in den Zuflußrohren und den Zylinderausgangsleitungen zu erwarten.

Als Beispiel ergibt die Behandlung einer Menge Q = 20 l/s von Meerwasser eine Nutzwasserproduktion von Q·0,3 = 6 l/s bzw. 518,4 m³/Tag.

Hierbei ergeben sich folgende Werte:

Meerwasser, das durch den Zylinder fließt:

$$Q_m = Q\frac{1-Y}{1-s'/S} = 20\frac{0,7}{0,99} = 14,14 \ 1/s$$

$$(s'/S = 0,01)$$

Zylinderquerschnitt:

$$S = \frac{14,14}{3,0} = 4,71 \ dm^2$$

Zylinderdurchmesser = 245 mm

Achsendurchmesser = 24,5 mm

Hierbei ergibt sich für einen Halbzyklus von 2 Sekunden eine Bewegungsstrecke:

$$L = 2 \times 300 \times 600 \ mm.$$

Eine derartige Vorrichtung kann eine Wassermenge von 518,4 $m^3$/Tag erzeugen, d. h. sie kann 30 bis 35 Osmosemembranen vom Typ DUPONT B-10 oder dergleichen speisen.

Mit doppelter Geschwindigkeit und dem gleichen Durchmesser könnten bis zu 1037 $m^3$/Tag erzeugt werden.

Hinsichtlich der mechanischen Leistung ist festzustellen, daß, wenn $F_R$ der Widerstand ist, den der Kolben der Bewegung aufgrund der Reibung zwischen dem Kolben und dem Zylinder und der Achse und der Dichtung entgegensetzt, der Leistungsverlust wie folgt ist:

$$F_R \cdot v = \xi(S - S') \cdot V.$$

- 12 -

Andererseits ist die Nutzleistung beim Pumpen des zu behandelnden Salzwassers wie folgt:

$$S \cdot (Poi - Joi)(1 - \frac{S'}{S}) \cdot v,$$

wobei der mechanische Wirkungsgrad wie folgt ist:

$$\int_{cil} = 1 - \frac{F_R}{S(Poi - Joi)(1 - \frac{S'}{S}) + F_R}$$

Hierbei ist der Nenner in folgender Größenordnung:

$$471 \times 50 \times 0,99 = 23.300 \text{ kp,}$$

während der Zähler höchstens in der Ordnung von weniger als 1/10 kp sein kann, d.h.:

$$\varepsilon \leq \frac{10}{471} = 0,021 \text{ kg/cm}^2 \quad \text{und} \quad \rho_{cil} > 0,9995,$$

d. h. der Wirkungsgrad ist praktisch gleich Eins. Dies ist einer der größten Vorteile des beschriebenen Wasserentsalzungssystems.

Aus diesem Grunde würde ein Wirkungsgrad von 1 bei allen vorstehenden Berechnungen für die Druckrückgewinnungseinrichtung verwendet.

Für den Fall einer geringeren Produktion, beispielsweise von 3 l/s, oder einer Produktion von $Q \cdot Y = 0,9$ l/s, entsprechend 77,76 $m^3$/Tag, ergeben sich unter Beibehaltung der gleichen Geschwindigkeitsparameter wie vorher folgende Werte:

$$Q_M = 3 \frac{0,7}{0,99} = 2,12 \text{ l/s}$$

- 13 -

Zylinderquerschnitt $S = \frac{2,12}{3} \cdot 0,707 \; dm^2$

Zylinderdurchmesser = 94 mm

Für einen gleichen Halbzyklus wie den vorstehend beschriebenen sind die Längen gleich.

In bezug auf den Wirkungsgrad ist festzustellen, daß dieser wie folgt ist:

$$\int_{cil} < 1 - \frac{10}{70,7 \cdot 50 \cdot 0,99} = 0,997 \sim 1,0$$

Das beschriebene Wasserbehandlungssystem ist für jede Art von Wasser anwendbar, für die das Verfahren der umgekehrten Osmose verwendet wird, d. h. sowohl für Salzwasser, Meerwasser als auch bei der Rückgewinnung von Abwässern.

Das Wasserentsalzungssystem kann in Anlagen beliebiger Größe verwendet werden, d. h. selbst bei sehr kleinen und mittleren Systemen, die ohne Energierückgewinnung nicht verwendbar sind.

In großen Anlagen ist das beschriebene Wasserbehandlungssystem ebenfalls anwendbar, zur Vermeidung sehr großer Zylinder sollten jedoch mehrere Zylinder verwendet werden, die gleichzeitig arbeiten, wobei auch gleichzeitig mehrere Pumpen verwendet werden, so daß die Zuverlässigkeit der Gesamtanlage erhöht wird. Bei sehr großen Anlagen kann gegebenenfalls auch die Ausführungsform gemäß Fig. 4 mit Vorteil verwendet werden, wie im folgenden beschrieben wird.

- 14 -

Bei dieser Ausführungsform werden zwei kugelförmige Behälter 17, 17' verwendet, die einen entsprechend hohen Druck aushalten und in die Zwischenmembranen aus Gummi oder elastischem Kunststoffmaterial eingesetzt sind, die ein Mischen des zu behandelnden Wassers in der Kammer 5 mit der Salzlauge in der Kammer 6 verhindern.

Dieses System kann insbesondere bei größeren Anlagen mit größeren Füll- und Entleerungszeiten verwendet werden, doch ist eine Zusatzpumpe 19 erforderlich, um die Behälter mit zu behandelndem Salzwasser zu füllen und um die Salzlauge mit der erforderlichen Geschwindigkeit auszustoßen. Weiterhin ist auch die Synchronisierung der Zyklen in den beiden kugelförmigen Behältern und die Feststellung der richtigen Zeit zum Öffnen und Schließen der Ventile schwieriger zu ermitteln als bei der Ausführungsform mit beweglichen Kolben.

Diese Synchronisierung und Steuerung der Ventile kann mit Hilfe von Verschlüssen in jedem kugelförmigen Behälter erreicht werden, die an geeigneten Stellen der Membranen derart angeordnet sind, daß sie die Auslässe 10, 10' des zu behandelnden Wassers verschließen, sobald die kugelförmigen Behälter mit Salzlauge gefüllt sind, so daß der im Ausgangsrohr auftretende momentane Druckabfall durch einen Meßfühler festgestellt wird, der die Ventile betätigt.

Weiterhin ist es für eine korrekte Betriebsweise erforderlich, daß die Pumpe 19 für das zu behandelnde Wasser in der Lage sein muß, den einen kugelförmigen Behälter eher zu füllen, bevor sich der andere mit

- 15 -

Salzlauge füllt, d. h. es muß folgende Bedingung erfüllt sein: $Q_L > Q (1-Y)$.

Die Behälter können genau so die Form eines Kugelsegmentes, eines Zylinders mit abgeschlossenen Kugelsegmenten oder eine sonstige Form aufweisen.

Eine weitere Möglichkeit besteht in einem rotierenden System.

Zusätzlich kann zu den beschriebenen Systemen ein Höhenunterschied im Gelände ausgenutzt werden, wie dies in Fig. 5 gezeigt ist.

Bei dieser Ausführungsform pumpt die Hauptpumpe 1 das Wasser zu einem Zwischenbehälter 20, welcher höher liegt als die Anlage selbst. Die Osmosemoduln 2 werden in der gleichen Weise gespeist, wie dies weiter oben beschrieben wurde, wobei jedoch die von der Hauptpumpe 1 gelieferte Wassermenge durch eine gleichwertige Wassermenge ersetzt wird, die mit dem notwendigen Druck von dem Zwischenbehälter 20 aus zuläuft.

Ein derartiges System kann verschiedene Vorteile aufweisen.

Die Hauptpumpe 1 verbraucht den größten Teil der Energie, die für das Verfahren der Wasserentsalzung benötigt wird. Andererseits besteht der Grund für die Wassergewinnung durch Entsalzung darin, daß an derartigen Orten keine Wasserquellen zur Verfügung stehen. Entsprechend muß an diesen Stellen auch elektrische Energie mit Hilfe von Dampfkraftwerken

- 16 -

erzeugt werden, die normalerweise genug Energie zu Spitzenzeiten liefern, die jedoch zu Zeiten minimalen Verbrauchs überdimensioniert sind. Die Betreiber von Kraftwerken sind daher bemüht, Abnehmer für diese Energie zu Zeiten niedrigsten Verbrauchs zu finden.

Der Zwischenspeicher 20 der Ausführungsform nach Fig. 5 kann zu diesen Zeiten minimalen Energieverbrauchs gefüllt werden, so daß sehr wenig kostspielige elektrische Energie nötig wird, was zusätzliche Kosteneinsparungen ergibt und gleichzeitig das Problem der überschüssigen Energie der Kraftwerke zu vorgegebenen Zeiten löst. Die Hauptpumpe 1 wird lediglich zu Zeiten eines Überflusses an elektrischer Energie betrieben, wobei zur Erzielung der nötigen Durchschnittsleistung die Leistung dieser Pumpe gegebenenfalls zu erhöhen ist.

Der Zwischenbehälter 20 dient damit gleichzeitig als Regulierbehälter, wodurch die Zuverlässigkeit des gesamten Systems vergrößert wird, da bei Verwendung einer Hauptpumpe 1 mit ausreichender Leistung diese aufgrund eines Ausfalls oder einer Wartung abgeschaltet werden kann, ohne daß die Erzeugung von Nutzwasser unterbrochen wird.

In der vorstehenden Beschreibung wurden Druckstufen für die Pumpen 1 und 7 derart festgelegt, daß die Druckrückgewinnungseinrichtung gerade den Druck der Salzlauge zurückgewinnt, die das Abwasser bildet.

Das beschriebene System kann jedoch gemäß dem Schema der Fig. 1 und 1' dahingehend verallgemeinert

- 17 -

werden, daß die Energierückgewinnungseinrichtung 3 zur Leistungsübertragung der in dem Abwasser enthaltenen Leistung auf das zu behandelnde Wasser dient, so daß, wenn P' und Q' der Druck und die Strömung aus der Einrichtung 3 sind , sich folgendes ergibt:

$$P' \cdot Q' = (1-Y)Q \cdot (Poi-Joi-\varepsilon).$$

Hierbei ist $\varepsilon$ praktisch gleich Null.

Dieses System ist für alle Werte von P' und Q' gültig, die die vorstehende Gleichung erfüllen, vorausgesetzt, daß $P' \leq Poi$ und $Q' \leq Q$ ist.

Dies trifft selbst beim obersten Grenzwert der Wassermenge Q' = Q zu, wobei die Hauptpumpe 1 praktisch keine Wassermenge mehr liefert und einzig und allein eine Basis-Druckkraft von $P' = (1-Y)(Poi-Joi-\varepsilon)$ in dem Kreis erzeugt, so daß die Pumpe 7 die Wassermenge Q und den veränderlichen Druck

$$Poi - P' \leq Y \cdot Poi + (1-Y)(Joi +\varepsilon)$$

liefert, wobei dieser Druck vom Zustand der Membran und dergleichen abhängt, damit die richtige Strömungsmenge erzeugt wird.

Am unteren Grenzwert ist Q durch den Grenzwert des Speisedruckes von P' = Poi begrenzt, so daß sich folgendes ergibt:

$$Q' = (1-Y) \cdot Q \cdot (1 - \frac{Joi + \varepsilon}{Poi})$$

Die Hauptpumpe 1 arbeitet dann mit konstantem Druck, der gleich dem Speisedruck Poi der Membranen ist. Theoretisch arbeitet hierbei die Pumpe 7 nicht. In der Praxis kann der Druck der Hauptpumpe 1 auf den minimalen Wert Poi für neue Membranen eingestellt werden. Wenn ein größerer Druck Poi aufgrund der Alterung der Membranen benötigt wird, so kann dieser Zusatzdruck von der Pumpe 7 geliefert werden.

Die Druckrückgewinnungseinrichtung kann vorzugsweise eine derartige Ausführungsform aufweisen, wie sie in den Fig. 6 und 6' gezeigt ist, wobei zur Erreichung der Strömungsmengen- und Druckdifferenzen unterschiedliche Durchmesser der beiden Zylinder verwendet werden, um eine Anpassung an die erforderlichen Durchflußmengen- und Druckbeziehungen zu ermöglichen.

Weiterhin kann gemäß Fig. 6' eine zusätzliche Antriebseinrichtung 21 an der die Kolben 4 und 4' verbindenden Achse 15 angeordnet werden, wobei in diesem Fall die Pumpe 7 gegebenenfalls entfallen kann. Alternativ kann die Pumpe 7 auch in der Zuführungsleitung für das zu behandelnde Wasser an die Druckrückgewinnungseinrichtung angeordnet werden.

- 19 -

Patentansprüche:

1. Wasserentsalzungssystem nach dem Verfahren der umgekehrten Osmose, mit einem Osmosemodul (2) zur Durchführung des Verfahrens der umgekehrten Osmose und mit einer Hauptpumpe (1) zur Speisung des Osmosemoduls (2) mit unter Druck stehendem salzhaltigem Wasser, d a d u r c h  g e - k e n n z e i c h n e t ,  daß das Osmosemodul (2) zusätzlich zu der von der Hauptpumpe (1) ge- lieferten Wasserströmung von einer Wasserströ- mung aus einer Druckrückgewinnungseinrichtung (3; 3'; 17, 17') gespeist ist, die von der aus dem Osmosemodul (2) austretenden Salzlösung angetrieben ist.

2. Wasserentsalzungssystem nach Anspruch 1,  d a - d u r c h  g e k e n n z e i c h n e t ,  daß der Ausgang der Hauptpumpe (1) und/oder der Ausgang der Druckrückgewinnungseinrichtung (3, 3'; 17, 17') über eine Hilfspumpe (7) mit dem Eingang des Osmosemoduls (2) verbunden sind.

3. Wasserentsalzungssystem nach Anspruch 1 oder 2, d a d u r c h  g e k e n n z e i c h n e t , daß die Druckrückgewinnungseinrichtung (3) aus -- einem Zylinder besteht, der durch einen Kolben (4) in zwei Kammern (5, 6) unterteilt ist, von denen die erste über Ventile (8, 10) mit dem Eingang des Osmosemoduls (2) bzw. mit der Quelle des salzhaltigen Wassers verbunden ist, während die zweite (6) über Ventile (9, 11) mit dem Salzlaugeausgang des Osmosemoduls (2) bzw. mit einem Abfluß für die Salzlauge verbunden ist.

- 20 -

4. Wasserentsalzungssystem nach Anspruch 3, d a -
d u r c h   g e k e n n z e i c h n e t ,   daß
die Ventile (8 bis 11) so gesteuert sind, daß
das mit der Quelle des salzhaltigen Wassers verbundene Ventil (8) und das zum Abfluß der Salzlauge führende Ventil (9) geschlossen sind, während die anderen beiden Ventile (10, 11) offen
sind, und umgekehrt.

5. Wasserentsalzungssystem nach Anspruch 1 oder 2,
d a d u r c h   g e k e n n z e i c h n e t ,
daß die Druckrückgewinnungseinrichtung (3') zwei
gleichachsig angeordnete Zylinder(3, 3') aufweist, daß zwei über eine gemeinsame Achse (15)
verbundene Kolben (4, 4') in den Zylindern (3,
3') verschiebbar angeordnet sind, wobei die gemeinsame Achse (15) abgedichtet durch eine
Trennwand (16) zwischen den beiden Zylindern (3,
3') hindurchgeführt ist, daß die durch den Kolben (4) des ersten Zylinders (3) gebildeten Kammern (5, 5') jeweils über Ventile mit der Quelle
des salzhaltigen Wassers bzw. dem Eingang des
Osmosemoduls (2) verbunden sind und daß die
durch den Kolben (4') in dem zweiten Zylinder
(3') gebildeten Kammern jeweils über Ventile
(9, 9') mit dem Abfluß der Salzlauge bzw. über
Ventile (11, 11') mit dem Ausgang des Osmosemoduls (2) verbunden sind, wobei die Ventile so
gesteuert sind, daß ein Einlaßventil (8, 8')
der einen Kammer (5, 5', 6, 6') jedes Zylinders
und ein Auslaßventil (10, 10', 9, 9') der entgegengesetzten Kammer des jeweiligen Zylinders
geöffnet sind, während die anderen Ventile geschlossen sind.

- 21 -

6. Wasserentsalzungssystem nach einem der Ansprüche 3 bis 5, d a d u r c h g e k e n n - z e i c h n e t , daß die Ventile (8, 8', 10, 10') der Kammern (3, 3') des ersten Zylinders Rückschlagventile sind, während die Ventile (9, 9', 11, 11') der Kammern (6, 6') des zweiten Zylinders (3') servogesteuerte Ventile sind, die durch die Bewegung der Kolben (4, 4') steuerbar sind.

7. Wasserentsalzungssystem nach einem der vorhergehenden Ansprüche, d a d u r c h g e - k e n n z e i c h n e t , daß der oder die Kolben (4, 4') mit einer Antriebsvorrichtung (21') verbunden sind.

8. Wasserentsalzungssystem nach einem der Ansprüche 1 bis 6, d a d u r c h g e k e n n - z e i c h n e t , daß zwischen dem Salzlaugeausgang des Osmosemoduls (2) und dem Eingang der Druckrückgewinnungseinrichtung (3; 3'; 17, 17') eine Pumpe angeordnet ist.

9. Wasserentsalzungssystem nach einem der Ansprüche 5 bis 8, d a d u r c h g e k e n n - z e i c h n e t , daß die beiden Zylinder (3, 3') unterschiedliche Durchmesser aufweisen.

10. Wasserentsalzungssystem nach Anspruch 1 oder 2, d a d u r c h g e k e n n z e i c h n e t , daß die Druckrückgewinnungseinrichtung (17, 17') durch zwei kugelförmige Behälter (17, 17') gebildet ist, die jeweils durch eine elastische Membran (18, 18') in zwei Kammern (5, 6, 5', 6')

0055981

- 22 -

unterteilt sind und daß die ersten Kammern (5, 5') über Rückschlagventile (8, 8') mit der Quelle des salzhaltigen Wassers und über weitere Rückschlagventile (10, 10') mit dem Eingang des Osmosemoduls (2) verbunden sind, während die zweiten Kammern (6, 6') über servogesteuerte Ventile (9, 9') mit dem Abfluß für die Salzlauge bzw. über Ventile (11, 11') mit dem Ausgang des Osmosemoduls (2) verbunden sind.

11. Wasserentsalzungssystem nach einem der vorhergehenden Ansprüche, d a d u r c h   g e - k e n n z e i c h n e t ,  daß das System auf einem Gelände mit Höhenunterschied aufgestellt ist und daß zwischen der Hauptpumpe (1) und dem Wasserentsalzungssystem ein hochgelegener Speicherbehälter (20) angeordnet ist.

**Fig.1**

**Fig.1'**

**Fig.2**

1/3

0055981

Patentanwälte
Dipl.-Ing. C. Walla
Dipl.-Ing. G. Koch
Dr. T. Haibach
Dipl.-Ing. R. Feidkamp
8 München 2
Kaufingerstr. 8, Tel. (089)...

Fig.3

Fig.4

Fig.5

Fig.6

Fig.6'

## Europäisches Patentamt
### EUROPÄISCHER RECHERCHENBERICHT

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| X | GB - A - 2 030 056 (L. & C. STEIN-MÜLLER GmbH) <br><br> * Figuren 2.1, 2.2; Anspruch 1: Seite 1, Zeilen 6-83; Seite 1, Zeile 118 - Seite 2, Zeile 30 * <br><br> & DE - A - 2 830 987 <br><br> & DE - A - 2 924 971 <br><br> -- | 1,2,10 | B 01 D 13/00 <br> C 02 F 1/44 |
| X | OFFICE OF SALINE WATER/ U.S. DE-PARTMENT OF THE INTERIOR RESEARCH AND DEVELOPMENT REPORT, Nr. 357, August 1968 <br> CHEN-YEN CHENG et al.: "A flow work exchanger for desalination processes" <br><br> * Seiten 1,2 ("Summary"); Seite 17, Zeile 1 - Seite 20, Zeile 10; Seite 23, Zeile 3 - Seite 31, Zeile 22; Seite 40, Zeile 8 - Seite 44, Zeile 6; Figuren 2,6,12,14c,19; Seiten 55-57; Seite 60, Zeile 1 - Seite 61, Zeile 12; Seite 63, Zeilen 4-11 * <br><br> -- | 1-6,8, 10 | RECHERCHIERTE SACHGEBIETE (Int Cl.³) <br><br> B 01 D <br> C 02 F |
| X | FR - A - 2 385 427 (B.G. KEEFER) <br><br> * Figuren 1,9; Ansprüche 1,2, 11,18,19; Seite 12, Zeile 9 - Seite 13, Zeile 36; Seite 29, Zeile 22 - Seite 32, Zeile 4 * <br><br> & DE - A - 2 812 761 <br><br> -- | 1,3-7 | KATEGORIE DER GENANNTEN DOKUMENTE <br><br> X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument |
| P | EP - A - 0 028 913 (SYKES OCEAN WATER LTD.) <br> ./. | | |

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30-03-1982 | HOORNAERT |

EPA form 1503.1 06.78

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | * Figur 1; Ansprüche 1,2; Seite 6, Zeile 5 - Seite 13, Zeile 17 * | 1,5,6, 11 | |
| | -- | | |
| A | CHEMICAL ENGINEERING, Band 75, Nr. 25, 18. November 1968, Seiten 153-158 New York, U.S.A. E.F. MILLER: "Lowering the cost of reverse-osmosis desalting" | | |
| | * Figur 5; Seite 156, Spalte 2, Zeile 12 - Seite 158, Spalte 1, Zeile 2 * | 11 | RECHERCHIERTE SACHGEBIETE (Int. Cl.³) |
| | -- | | |
| A | GB - A - 2 020 569 (COMMONWEALTH SCIENTIFIC AND INDUSTRIAL RESEARCH ORG.) | | |
| | * Insgesamt * | 1,3-7, 9 | |
| | -- | | |
| A | US - A - 3 825 122 (J.S. TAYLOR) | | |
| | * Insgesamt * | 1,3-7, 9 | |
| | ----- | | |